**Europäisches Patentamt**

**European Patent Office**

**Office européen des brevets**

(19)

(11) Numéro de publication : **0 278 879 B1**

## (12) FASCICULE DE BREVET EUROPEEN

(45) Date de publication du fascicule du brevet :
**13.05.92 Bulletin 92/20**

(51) Int. Cl.$^5$ : **A22C 17/00**

(21) Numéro de dépôt : **88420032.0**

(22) Date de dépôt : **03.02.88**

(54) **Machine pour la fabrication automatique des brochettes de viandes et/ou de légumes enfilés sur des broches.**

(30) Priorité : **04.02.87 FR 8701658**

(43) Date de publication de la demande :
**17.08.88 Bulletin 88/33**

(45) Mention de la délivrance du brevet :
**13.05.92 Bulletin 92/20**

(84) Etats contractants désignés :
**AT BE CH DE ES FR GB GR IT LI LU NL SE**

(56) Documents cités :
**EP-A- 0 078 232**
**EP-A- 0 098 451**
**EP-A- 0 113 637**
**EP-A- 2 572 894**
**FR-A- 2 535 169**
**FR-A- 2 574 252**

(73) Titulaire : **Emsens Antoine SARL**
**Site Industriel C3F**
**F-42490 Fraisses (FR)**

(72) Inventeur : **Emsens, Michel**
**La Rivoire**
**F-42490 Fraisses (FR)**

(74) Mandataire : **Dupuis, François**
**Cabinet Laurent et Charras 3, place de**
**l'Hôtel-de-Ville**
**F-42000 Saint-Etienne (FR)**

## Description

L'objet de l'invention se rattache au secteur technique de la mise en forme ou traitement des produits alimentaires.

La machine est du type de celle comprenant un dispositif d'embrochement disposé axialement au-dessus du bac recevant les différentes couches de viande, en étant conformé et commandé verticalement en hauteur pour autoriser l'embrochement de l'ensemble des broches qui sont positionnées verticalement dans des agencements que présente la face supérieure du bac qui fait office de couvercle, de sorte que lesdites broches sont en appui sur les couches de viande et/ou de légumes.

Ce type de machine est divulgué par exemple dans les brevets FR 2.535.169, 2.572.894 et 2.574.252. Malgré des formes de réalisation différentes, chacune des machines décrites nécessite la présence d'organes de préperçage au moyen de tiges pointues, aptes à assurer une perforation des différentes couches de viande pour faciliter l'enfoncement, dans une deuxième phase opératoire, des broches. On conçoit que cela diminue la cadence de production avec, en outre, des résultats très aléatoires. En effet, le préperçage des couches de viande et l'enfoncement des broches n'étant pas simultanés, il peut en résulter fréquemment une déviation desdites broches qui ne suivent plus les trous de guidage.

L'invention s'est fixée pour but de remédier à ces inconvénients d'une manière simple, efficace et rationnelle, en simplifiant la structure du dispositif d'embrochement en supprimant notamment l'opération de préperçage, toujours en ayant pour objectif la cadence de production et la qualité des résultats obtenus.

Pour résoudre le problème posé d'assurer l'embrochage des différentes broches sans nécessiter une opération de préperçage, il a été conçu une machine pour la fabrication automatique de brochettes enfilées sur des broches, du type de celle comprenant un dispositif d'embrochement disposé axialement au dessus d'un couvercle que présente un bac recevant différentes couches de viandes et/ou de légumes, cette machine étant remarquable pour la combinaison des dispositions suivantes :

– les broches sont disposées dans une pluralité de tubes engagés dans des trous débouchants formés dans l'épaisseur du couvercle du bac, pour que lesdites broches soient en appui sur les couches de viandes et/ou de légumes ,

– les extrémités des tubes, opposées à celles engagées dans les trous du couvercle, sont fixées dans des trous débouchants formés dans l'épaisseur d'une plaque d'accouplement,

– la longueur des tubes est déterminée pour que les broches, en appui sur les couches de viandes et/ou de légumes, débordent de ladite plaque d'accouplement, d'une longueur (x) pour que lesdites broches soient sollicitées par un plateau horizontal assujetti à des moyens de commande pour être déplacé verticalement en vue de provoquer, en combinaison avec un organe de butée, l'enfoncement de l'ensemble des broches et des tubes dans les différentes couches de viandes et/ou de légumes.

Compte tenu de ces dispositions; le bâti de la machine peut être prolongé latéralement au niveau de l'introduction du bac, par un plan horizontal conformé et agencé en combinaison avec des moyens de commande pour assurer automatiquement :

– le positionnement des bacs garnis de broches à l'intérieur de la machine en alignement avec le dispositif d'embrochement ;

– le retrait des bacs après embrochement et tranchage des différentes couches de viande et/ou de légumes ;

– l'évacuation des bacs.

L'invention est exposée ci-après plus en détail, à l'aide des dessins qui représentent seulement un mode d'exécution.

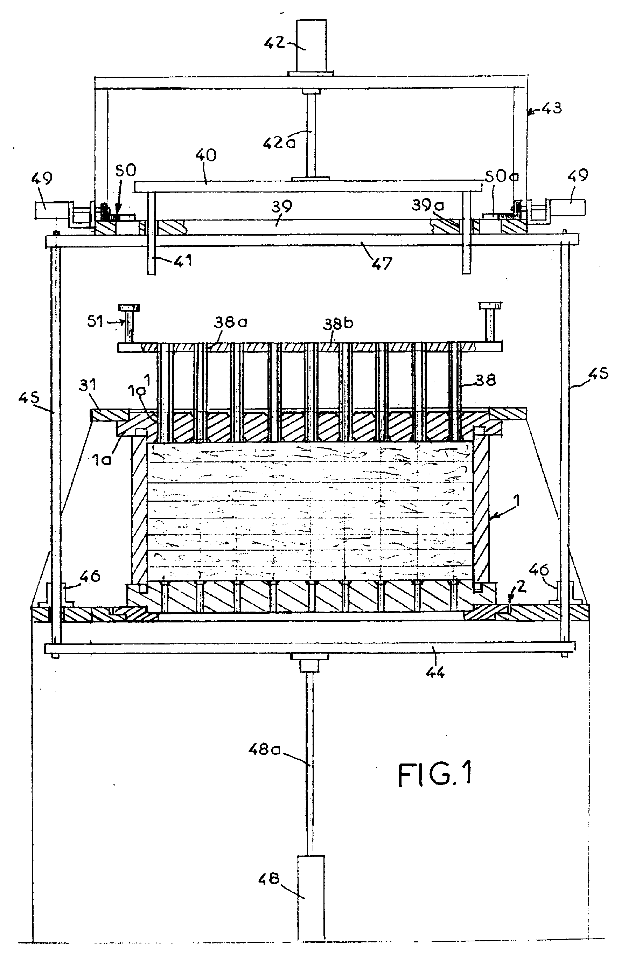

– La figure 1 est une vue en coupe de la machine,

– les figures 2, 3, 4, 5, 6, 7, 8, 9, 10 sont des vues à caractère purement schématique illustrant les principales phases du fonctionnement ; pour une meilleure clareté des dessins, une seule broche est représentée,

– la figure 11 est une vue en plan partielle montrant l'accrochage de l'ensemble porte-tubes,

– la figure 12 est une vue en perspective à caractère schématique d'une partie de la machine, notamment du dispositif d'embrochement.

D'une manière connue, les différentes couches de viande et/ou de légumes sont empilées à l'intérieur d'un bac (1).

La partie supérieure du bac (1) reçoit un couvercle (1a) qui est agencé dans son épaisseur pour autoriser le positionnement vertical et ordonné d'une pluralité de broches (20). Les trous verticaux (1a1) recevant les broches (20) sont chanfreinés à chacune de leurs extrémités. Le couvercle (la) est centré à l'intérieur du bac (1), en appui sur les parois.

Selon l'invention, les broches (20) sont disposées dans une pluralité de tubes (38) en nombre et en correspondance avec les trous verticaux (1a1) du couvercle. L'une des extrémités des tubes (38) est fixée dans des trous débouchants (38a) formés dans l'épaisseur d'une plaque (38b) pour constituer un ensemble porte-tubes de guidage et de prépositionnement des broches (20).

Cet ensemble porte-tubes (38) est destiné a être engagé par l'extrémité libre desdits tubes, dans les trous (1a1) du couvercle (1a), en appui sur les couches de viandes et/ou de légumes préalablement disposés à l'intérieur du bac. L'introduction des broches (20) après positionnement de l'ensemble porte tubes dans le couvercle (1a1) s'effectue donc à partir de la plaque (38b).

La longueur des tubes (38) est déterminée pour qu'après leur positionnement dans le couvercle (1a), les broches introduites (20), en appui sur les couches de viande, débordent d'une certaine longueur (x) de la plaque (38b). Cette partie de débordement (x) est très réduite par rapport à la longueur totale des broches (20). A titre indicatif, la partie (x) représente très sensiblement le quart de la longueur de la broche.

Compte-tenu de cette conception, le dispositif d'embrochement disposé au-dessus du bac et d'une manière coaxiale, comprend un plateau d'appui (39) disposé dans un plan horizontal et assujetti à un moyen de commande (48) pour être animé d'un mouvement de déplacement vertical. Le plateau (39) reçoit à libre coulissement, un organe d'appui et de butée réglable en fonction de la partie débordante (x) des broches, et susceptible de prendre appui sur le plateau (39). Cet organe de butée est constitué par une semelle (40) disposée au-dessus du plateau (39) et présentant à chacun de ses angles notamment, des pions de centrage et d'appui (41) coopérant à libre coulissement dans des trous correspondants (39a) formés dans l'épaisseur dudit plateau (39).

La semelle (40) est accouplée à la tige (42a) d'un vérin (42) dont le fût est fixé sur un étrier (43) solidaire du plateau (39), et au-dessus de ce dernier.

Le moyen de commande (48) du plateau (39) est un vérin disposé à l'intérieur du bâti de la machine, coaxialement sous la base du bac. La tige (48a) de ce vérin est solidaire d'une barre transversale (44) qui présente à chacune de ses extrémités, des colonnes verticales de guidage (45) susceptibles de coulisser librement dans des bagues (46). L'extrémité supérieure libre des colonnes (45) est aussi accouplée à une barre transversale (47) qui est fixée sur le plateau (39).

A noter que la disposition des colonnes de guidage par rapport au bâti de la machine est déterminée pour que la barre d'accouplement (47) soit disposée très sensiblement selon les diagonales du plateau (39).

Pour assurer la remontée du porte-tubes, le plateau (39) présente des moyens d'accrochage temporaire susceptibles de coopérer avec des agencements que présente la plaque d'accouplement (38b) des tubes (38). Dans ce but, le plateau (39) présente, d'une manière préférée sur au moins deux côtés parallèles, un vérin (49) dont la tige est accouplée à un patin (50) qui présente une échancrure (50a) susceptible de coopérer avec une tige épaulée (51) que présente en débordement, la face supérieure de la plaque (38b).

Le patin (50) est en appui sur le plateau (39) qui présente une ouverture pour l'engagement et le débordement de la tige épaulée (51).

En position repos, les pions de butée et de centrage (41) débordent de la face de dessous du plateau (39) d'une longueur très légèrement inférieure à la partie débordante (x) des broches positionnées dans les tubes (38).

La base du bac (1) est positionnée et centrée dans un plateau (2) monté tournant dans une partie appropriée du bâti, tandis que la partie supérieure dudit bac, notamment le couvercle (1a), est positionnée dans une semelle d'appui et de centrage fixe (31) solidaire du bâti. La semelle (31) et le couvercle (1a) du bac sont conformés en combinaison pour permettre le pivotement circulaire dudit bac (1) monté dans le plateau tournant.

En regard et en alignement des fentes verticales que présente, d'une manière connue, le bac (1), est disposé un dispositif de coupe de tout type connu et approprié et apte à assurer en une seule opération la coupe de la totalité des couches de viande à l'intérieur dudit bac.

On analyse maintenant le fonctionnement de la machine.

Après avoir garni le bac (1) des différentes couches de viande et/ou de légumes, on positionne dans les trous (1a1) de couvercle (1a), l'ensemble de guidage et de positionnement des broches, les tubes (38) prenant appui sur la ou les couches de viande extrêmes. On introduit manuellement ou automatiquement les broches (20) dans les tubes (38) à partir de la plaque (38b), lesdites broches, en appui sur la ou les couches de viande extrêmes débordant d'une longueur (x) de la plaque (38b) comme indiqué.

Le bac (1) est ensuite introduit dans les moyens de centrage et de positionnement du bâti à savoir le plateau tournant (2) et la semelle d'appui et de centrage (31). A noter que l'introduction du bac (1) dans la machine peut s'effectuer manuellement, ou bien automatiquement.

Il est à remarquer que le positionnement de l'ensemble des tubes de guidage (38) et des broches (20) peut s'effectuer après l'introduction du bac (1) dans le plateau (2) et la semelle (31).

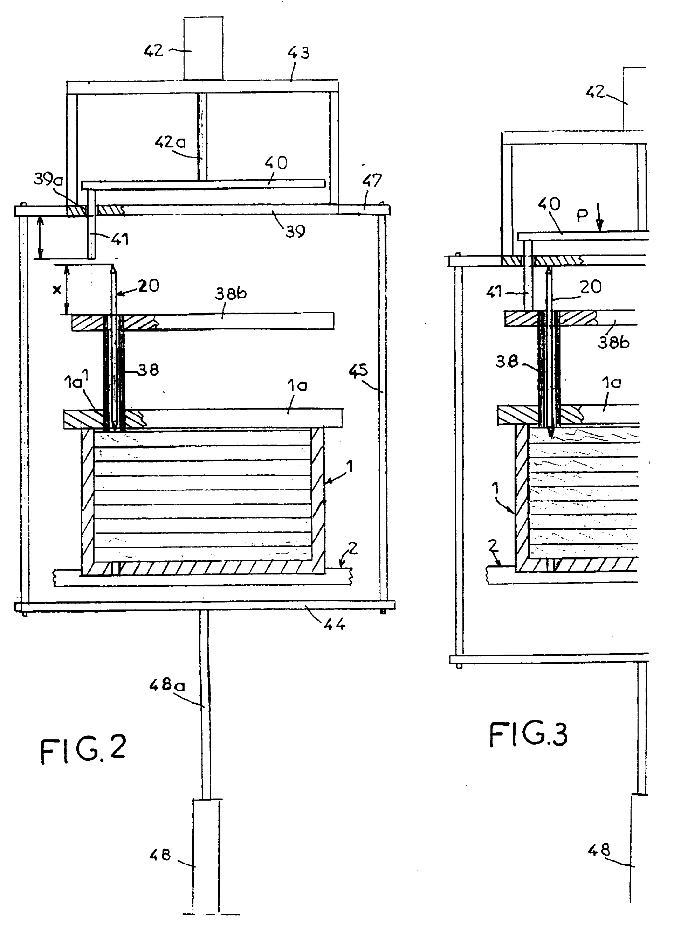

A ce stade, les pions d'appui et de butée (41) de la semelle (40) débordent de la face de dessous du plateau d'appui (39) d'une longueur très légèrement inférieure à celle de la partie débordante (x) des broches (figure 2).

Le vérin principal de commande (48) et le vérin d'asservissement (42) de l'organe de butée (40-41) sont actionnés pour provoquer la descente de l'ensemble du dispositif d'embrochement. A noter que le vérin (42) exerce sur la semelle (40) une force de pression (P), interdisant à ce stade du fonctionnement un mouvement relatif des pions (41) solidaires de la semelle et du plateau (39).

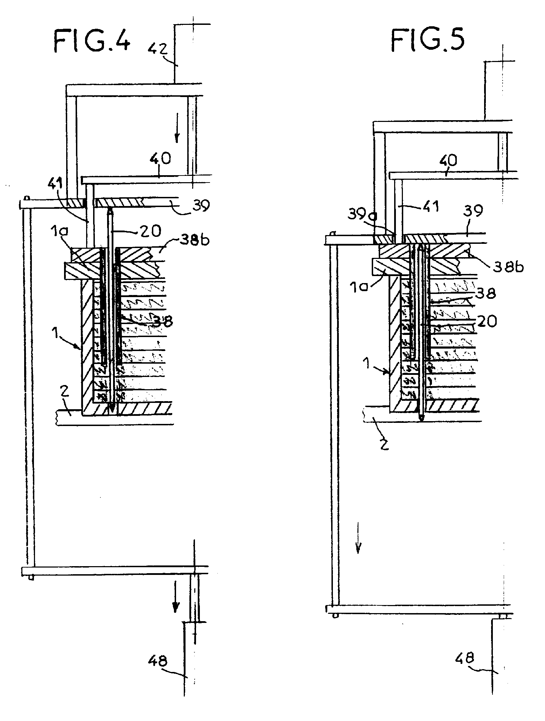

Compte-tenu de la longueur de la partie débordante des pions (41) très légèrement inférieure à,la distance (x), le plateau (39) prend d'abord appui sur l'ensemble des broches (20) pour provoquer leur débordement de l'extrémité libre des tubes (38) de l'ordre de 10mm jusqu'au positionnement en butée des pions (41) sur la lace supérieure de la plaque d'accouplement (38b) (figure 3). Ensuite, l'action conjuguée des vérins (48) et (42) assure la pénétration concomitante des broches (20) et des tubes (38) dans les différentes couches de viande jusqu'à la position de butée de la plaque d'accouplement (38b) sur le couvercle (1a1) du bac (figure 4). On commande alors en sens inverse le vérin (42) pour supprimer l'effet de pression et finir d'enfoncer la partie débordante (x) des broches sous l'effet de l'appui du plateau (39) commandé par le vérin (48) (figure 5). Il apparaît un mouvement relatif de coulissement du plateau (39) et des pions (41) de la semelle (figure 5).

A noter que l'épaisseur du couvercle (1a1) et de la semelle (1b) du bac (1), ainsi que la longueur débordante (x) des broches (20), sont convenablement déterminées pour qu'en fin d'enfoncement des broches (20) ces dernières débordent suffisamment de la ou des couches de viande disposées sur ladite semelle. On peut aussi prévoir d'équiper directement ou d'une manière rapportée la face inférieure du plateau (39) d'une pluralité de petits ergots susceptibles d'être engagés dans la partie supérieure des tubes lorsque le plateau est en appui sur le couvercle, pour,finir d'enfoncer les broches (20).

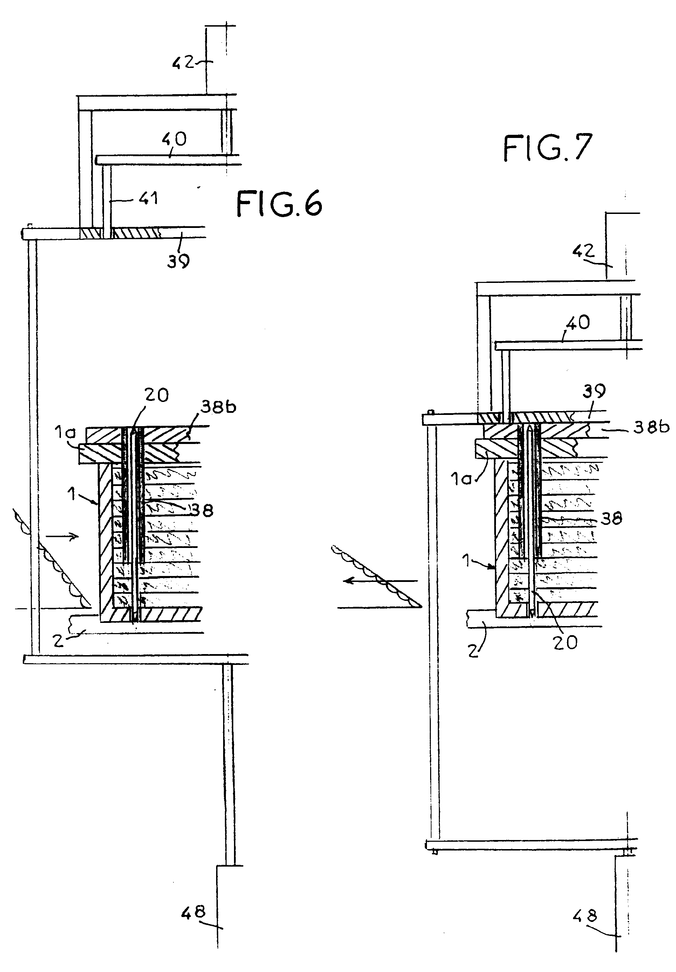

L'ensemble du dispositif d'embrochement est ensuite remonté en actionnant les vérins (42) et (48) pour que le positionnement relatif du plateau (39) et de la semelle (40) avec les pions (41) soit le même qu'en position de fin d'enfoncement des broches (figure 6).

Le dispositif de coupe est alors sollicité pour effectuer un premier tranchage puis un deuxième tranchage dans un plan orthogonal après avoir indexé circulairement le bac (1). Les opérations de coupe ne sont pas décrites en détail, car elles demeurent exécutées d'une manière connue.

Les opérations de coupe étant terminées, il convient alors de remonter l'ensemble du porte tubes (38).

A cet effet, pendant que les couteaux reculent après avoir effectué la deuxième coupe, l'ensemble du dispositif d'embrochement est redescendu (figure 7) toujours avec le même positionnement relatif du plateau (30) et de la semelle (40).

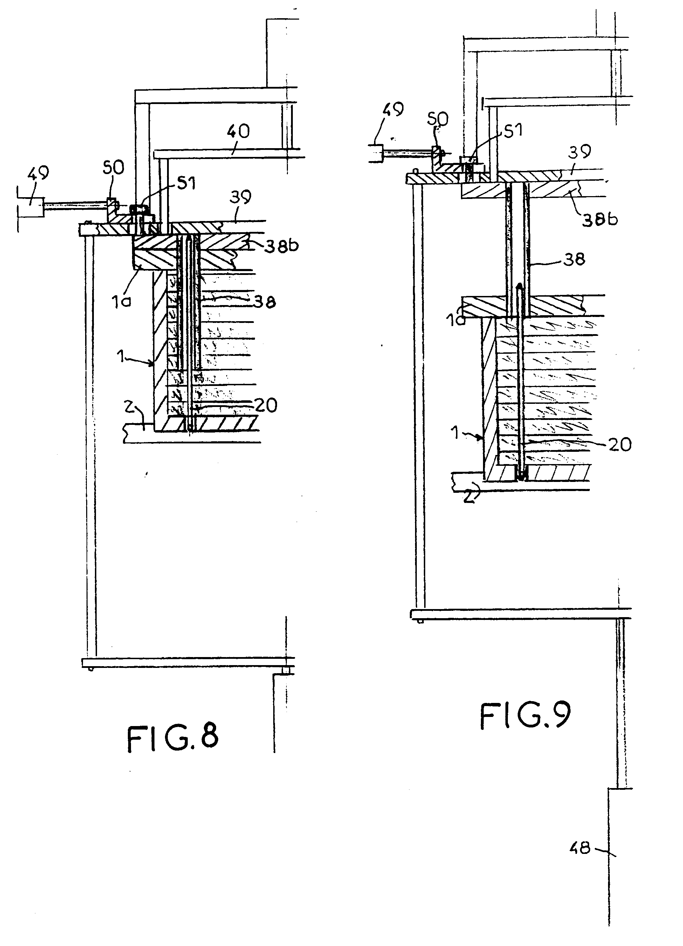

Les vérins (49) sont alors commandés pour provoquer le déplacement en translation de leurs patins d'accrochage respectifs (50) qui s'engagent sous la tête épaulée des tiges (51) lesquelles débordent du plateau (39) (figure 8).

L'ensemble du dispositif d'embrochement est alors remonté, le porte tubes (30) étant accroché au plateau (39) jusqu'à ce que lesdits tubes échappent la ou les couches de viande supérieure, mais demeurent positionnés dans l'épaisseur du couvercle (figure 9). Les broches (20) demeurent enfoncées dans les différentes couches de viande compte-tenu de la partie débordante de l'extrémité du tube en fin d'embrochement. Les fibres de la viande se ressèrent sur lesdites broches au fur et à mesure du coulissement vers le haut de l'ensemble des tubes.

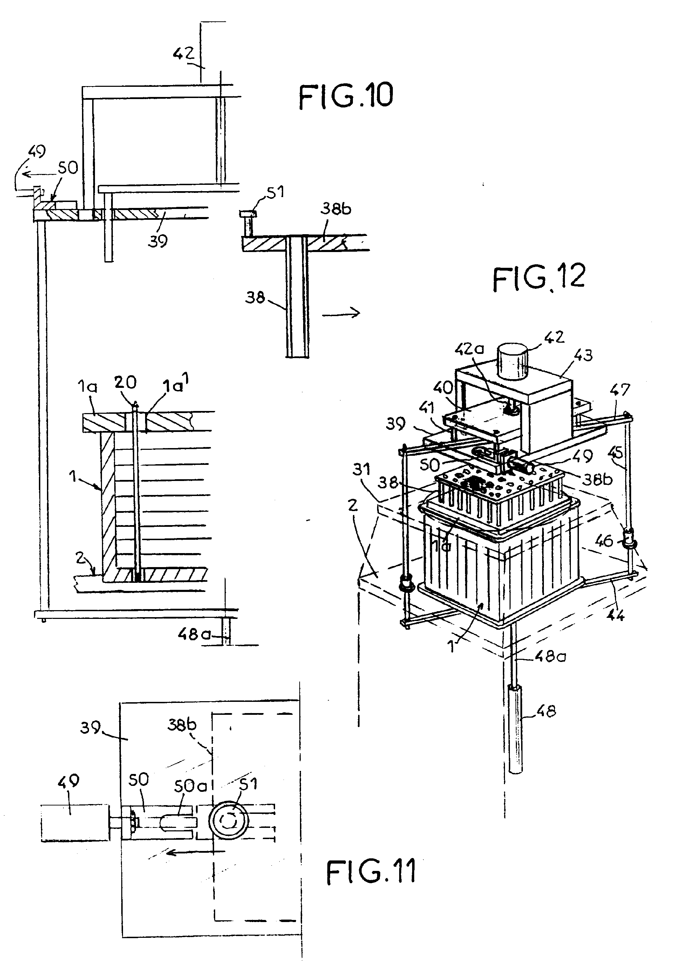

Les vérins (49) sont ensuite commandés en sens inverse pour déverrouiller le porte tubes (38) qui demeuré positionné dans le couvercle, en appui sur les couches de viande supérieures. Il suffit ensuite de remonter l'ensemble du dispositif d'embrochement (figure 10) et de replacer la,semelle et les pions en position initiale de départ de cycle (figure 2).

## Revendications

1. Machine pour la fabrication automatique de brochettes de viandes et/ou de légumes enfilées sur des broches (20), du type de celle comprenant un dispositif d'embrochement disposé axialement au dessus d'un couvercle (1a) que présente un bac (1) recevant différentes couches de viandes et/ou de légumes, caractérisée par la combinaison des dispositions suivantes :
   – les broches (20) sont disposées dans une pluralité de tubes (38) engagés dans des trous débouchants formés dans l'épaisseur du couvercle (1a) du bac (1), pour que lesdites broches soient en appui sur les couches de viandes et/ou de légumes ,
   – les extrémités des tubes (38), opposées à celles engagées dans les trous du couvercle (1a), sont fixées dans des trous débouchants formés dans l'épaisseur d'une plaque d'accouplement (38b),
   – la longueur des tubes est déterminée pour que les broches, en appui sur les couches de viandes et/ou de légumes, débordent de ladite plaque d'accouplement, d'une longueur (x) pour que lesdites broches soient sollicitées par un plateau horizontal d'appui (39) assujetti à des moyens de commande (48) pour être déplacé verticalement en vue de provoquer, en combinaison avec un organe de butée (40), l'enfoncement de l'ensemble des broches et des tubes dans les différentes couches de viandes et/ou de légumes.

2. Machine selon la revendication 1, caractérisée en ce que le plateau horizontal d'appui (39) reçoit à libre coulissement l'organe de butée (40) qui est réglable en fonction de la longueur de la partie débordante (x) des broches, ledit organe étant asservi à un moyen de mise en pression sous forme d'un vérin (42), pour coopérer en appui sur la plaque d'accouplement (38b).

3. Machine selon la revendication 2, caractérisée en ce que l'organe de butée (40) est constitué par une semelle (40) disposée au dessus du plateau et présentant des pions de centrage et d'appui (41), engagés à libre coulissement dans des trous correspondants formés dans l'épaisseur du plateau (39) et aptes à prendre appui sur la plaque d'accouplement (38b), lors de la descente dudit plateau (39) et de la mise en pression du vérin (42) dont la tige est solidaire de ladite semelle (40), le fût dudit vérin étant fixé sur un étrier support (43), solidaire du plateau d'appui (39).

4. Machine selon la revendication 3, caractérisée en ce que le moyen de commande du plateau d'appui (39) est un vérin (48) dont la tige (48a) est accouplée à une barre transversale (44) dont les extrémités sont solidaires d'une colonne de guidage (45) montée coulissante dans le bâti et dont les extrémités opposées sont solidaires d'une autre barre transversale (47) solidaire dudit plateau (39).

5. Machine selon la revendication 2, caractérisée en ce que le plateau d'appui (39) présente des moyens d'accrochage temporaire aptes à coopérer avec des agencements que présente la plaque d'accouplement (38b) en vue d'assurer la remontée de l'ensemble des tubes (38) et de ladite plaque lors du relevage du plateau (39) et de la semelle (40).

6. Machine selon la revendication 5, caractérisée en ce que les moyens d'accrochage sont constitués par des fourchettes (50) assujetties à des vérins (49) pour être déplaçables en translation, en vue de coopérer avec des tiges épaulées (51) que présente en débordement, la plaque d'accouplement (38b).

**Claims**

1. Machine for the automatic production of meat and/or vegetables brochettes which are slipped on spits (20), the machine being of the type including a spitting on device disposed axially above a cover (1a) with which is provided a vessel (1) accommodating various layers of meat and/or vegetables, and said machine is characterised by the combination of the following arrangements :
   – the spits (20) are disposed within a plurality of tubes (38) engaged into emerging holes formed within the thickness of the cover (1a) of the vessel (1), so that said spits will be abutted against the layers of meat and/or vegetables ;
   – the ends of the tubes (38) opposite the ones engaged within the holes of the cover (1a), are secured within emerging holes formed in the thickness of a coupling plate (38b) ;
   – the length of the tubes is so pre-détermined that the spits abutting against the layers of meast and/or vegetables will project from said coupling plate for a length (x), in order for said spits to be stressed by an abutment horizontal plate (39) monitored by control means (48) to be shifted vertically for driving in, in combination with an abutment organ (40), all of the spits and tubes within the various layer of meats and/or of vegetables.

2. Machine as claimed in Claim 1, characterized in that the horizontal abutment plate (39) accommodates for free sliding motion the abutment or stop organ (40) which is adjustable in accordance with the length of the protuding portion (X) of the spits, said organ being monitored by a pressure setting means in the form of a pressure cylinder (42) for co-operating in abutment onto the coupling plate (38b).

3. Machine as claimed in Claimed 2, characterized in that the stop organ (40) consists of a sole disposed above the plate and provided with centering and abutment pins (41) which are engaged for free sliding motion into corresponding holes formed within the thickness of the plate (39) and which are capable of being abutted onto the coupling plate (38b), upon downward motion of said plate (39) and pressure setting of the pressure cylinder (42), the rof of which is made fast with said hole (40), the body of said pressure cylinder being secured upon a supporting yoke (43) made fast with the abutment plate (39).

4. Machine as claimed in Claim 3, characterized in that the control means for the abutment plate (39) is a pressure cylinder (48) the rod (48a) of which is coupled to a crossbar (44) the ends of which are made fast with a guide post (45) mounted slidably within the framework, the opposite ends of this post being made fast with a further crossbar (47) made fast with said plate (39).

5. Machine as claimed in Claimed 2, characterized in that the abutment plate (39) is provided with temporary hooking means capable of co-operating with arrangements provided on the coupling plate (38b) for ensuring the upward motion of the assembly of the tubes (38) and said plate (39) and the sole (40) are lifted up.

6. Machine as claimed in Claim 5, characterized in that the hooking means consist of forks (50) monitored by pressure cylinders (49) in order to be shiftable in translation for co-operating with shouldered rods (51) which are provided in projection on the coupling plate (38b).

**Patentansprüche**

1. Maschine zur automatischen Aufbereitung von auf Spiesse (20) aufgespiessten Fleischwaren- und-/oder Gemüsebrochetten, in einer Ausführung, die eine oberhalb eines Deckels (1a) eines Behälters (1) achsrecht eingerichtete Aufspiessenvorrichtung aufweist, wobei der genannte Behälter verscbiedene Fleischwaren- un/oder Gemüseschichten aufnimmt, und die Maschine durch die Kombination der folgenden Einrichtungen gekennzeichnet ist :
   – die Spiesse (20) sind in eine Vielzahl von Rohren (38) angeordnet, die in ausmündende Bohrungen eingreifen, die in der Dicke des Deckels (1a) des Behälters (1) genildet sind, dzmit die besagten Spiesse auf die Fleischwaren- und-/oder Gemüseschichten abgestützt werden ;

– die den in die Bohrungen des Deckel (1a) eingreifenden, Enden entgegengesetztem Enden der Rohre (38) werden in ausmündenden Bohrungen befestigt, die in der Dicke einer Kupplungsplatte (38b) gebildet sind ;

– die Länge der Rohre wird so bestimmt, dass die auf den Fleischwaren- und/oder Gemüseschichten abgestützten Spiesse aus der genannten Küpplungsplatte um eine Lâge (x) hinausragen werden, damit die besagten Spiesse durch eine waagrechte Abstützungsplatte (39) beaufschlagt werden, die von den Antriebsmitteln (48) zur senkrechten Verschiebung angesteurt ist, um in Kombination mit einem Anschlagsorgan (40) das Einstecken der gesamten Spiesse und Rohre in die verschiedenen Fleischwaren- und/oder Gemüseschichten zu bewirken.

2. Maschine nach Anspruch 1, dadurch gekennzeichnet, dass die waagrechte Abstützungsplatte (39) für freie Verschiebung das Anschlagsorgan (40) aufnimmt, das je nach der Länge des hinausragenden Teils (x) der Spiesse verstellbar ist, wobei das besagte Organ durch ein als einen Druckzylinder (42) gebildetes druckgebendes Mittels beaufschlagt wird, um abstützungsweise mit der Kupplungsplatte (38b) zusammenzuarbeiten.

3. Maschine nach Anspruch 2, dadurch gekennzeichnet, dass das Anschlagsorgan (40) aus einer auf der Kupplungsplatte vorgesehenen Sohle besteht, die die Abstützungs- und Zentrierungsstifte (41) aufweist, die frei verschiebbar in die in der Dicke der Platte (39) gebildeten, entsprechenden Bohrungen eingreifen, wobei die gennanten Stifte zum Abstützen auf die Kupplungsplatte (38b) geeignet sind, wenn die besagte Platte (39) abgsenkt und der Druckzylinder (42) druckwirksam werden, dessen Zylinderstange der genannten Sohle (40) zugeordnet ist, indem das Gehäuse des besagten Druckzylinders auf einen mit der Abstützgunsplatte (39) festgemachten Tragbügel (43) befestigt wird.

4. Maschine nach Anspruch 3, dadurch gekennzeichnet, dass das Antriebsmittel für die Abstützungsplatte (39) aus einem Druckzylinder (48) besteht, dessen Stange (48a) mit einem Querbalken (44) verkuppelt ist, dessen Enden mit einer in das Gerüst verschiebbar angeordneten Fürungssäule (45) festgemacht sind, und dessen entgegengesetzte Enden mit einem weiteren Querbalken (47) auch festgemacht sind, der der besagten Platte (39) zugeordnet ist.

5. Maschine nach Anspruch 2, dadurch gekennzeichnet, dass die Abstützungsplatte (39) vorläufige Einhakenmittel aufweist, die mit Einrichtungen der Kupplungsplatte (38b) zusammenarbeiten können, um das Anheben der Rohre (38) und der besagten Platte zusammen bei dem Aufschlagen der Platte (39) und der Sohle (40) bewirken zu können.

6. Maschine nach Anspruch 5, dadurch gekennzeichnet, dass die Einhakenmittel aus Gabeln (50) bestehen, die den Druckzylindern (49) zugeordnet sind, um verschiebungseinstellbar zu sein, damit die besagten Gabeln mit gekröpften Stangen (51) zusammenwirken können, die hinausragend auf der Kupplungsplatte (38b) vorgesehen sind.

FIG.1

FIG.2

FIG.3

FIG.4

FIG.5

FIG.6

FIG.7

FIG.8

FIG.9

FIG.10

FIG.12

FIG.11